# EUROPEAN PATENT APPLICATION

(11) **EP 4 678 819 A1**
(43) Date of publication of application: **14.01.2026**
(21) Application number: 24712876.2
(22) Date of filing: 09.02.2024
(51) Int. Cl.: E01C 13/08, C08K 3/013, C08K 3/26, C08L 7/00, C08K 11/00, C08L 67/04, C08L 75/04

(54) **FILLER COMPOSITION FOR ARTIFICIAL TURF**

(71) Applicant: Chemical Wings S.L., 08110 Montcada I Reixac Barcelona (ES)
(72) Inventor: JOVÉ ANGERRI, Lluís, 08110 Montcada I Reixac (ES)
(74) Representative: Isern Patentes y Marcas S.L.
(86) International application number: PCT/ES2024/070072
(87) International publication number: WO 2025/168853

(57) **Abstract**

The present invention relates to an infill composition for artificial grass comprising particles with at least 20% natural rubber and at least one mineral filler. These particles may contain between 20 to 80 percent by weight of natural rubber and between 20 to 60 percent by weight of mineral filler. Furthermore, a plant filler can be incorporated, such as rice husks or walnut shells, in an amount between 5 and 25 percent by weight of the particles of the composition. The invention further provides a method for the preparation of this composition.

## Description

### TECHNICAL SECTOR

The present invention relates to infill compositions for artificial grass that do not generate microplastics during their useful life.

### BACKGROUND OF THE INVENTION

Artificial grass has emerged as a versatile and lasting solution for numerous applications, from sports fields to recreational areas and landscaping. The evolution of this technology has been driven by the constant search to replicate the qualities of natural grass. In this context, artificial grass infill has become a crucial component to improve the stability, safety and aesthetics of these synthetic surfaces.

To date, the predominant infill in artificial grass fields is mainly obtained from tyre recycling, using petroleum-derived rubber, known as styrene butadiene rubber (SBR). SBR is known for its durability, abrasion resistance and ability to withstand adverse environmental conditions, making it suitable for use in products requiring strength and flexibility.

Within the measures adopted by the European Union to limit the manufacture and marketing of products that generate polluting particles in air and water, the restriction of the granular infill used in synthetic sports surfaces stands out. The European Commission identifies this type of infill as "the largest source of intentional microplastics in the environment". These microplastic particles come from the degradation of this synthetic infill.

Among the products affected by the restriction, the granular infill used in synthetic sports surfaces, regarded by the European Commission as "the largest source of intentional microplastics in the environment" stands out. Given this scenario and with the aim of adopting more sustainable practices, the prevailing need to develop alternatives arises. In response, the aim is to create a substitute product made from natural rubber, thus contributing to mitigating the environmental impact associated with microplastics derived from conventional infill systems in artificial grass fields.

### DESCRIPTION OF THE INVENTION

The present invention focusses on avoiding the generation of microplastics in the environment generated by the degradation of artificial grass fields. The formulated composition is made up exclusively of elements that are environmentally-friendly and sustainable, thus addressing the environmental problems associated with the generation of micro plastics.

The first aspect of the invention relates to an infill composition for artificial grass comprising particles comprising at least 20% natural rubber and at least one mineral filler.

The second aspect of the invention relates to a method for the preparation of an infill composition for artificial grass according to the first aspect of the invention comprising the following steps:
i. Supplying the rubber and mineral filler in the appropriate proportions;
ii. Optionally, adding plant filler and/or auxiliary additive to the previous mixture in the appropriate proportions;
iii. Mixing the components of step i. or ii. until the mixture is homogenised; and
iv. Particularisation of the mixture obtained in the previous step by means of mechanical means to the desired size.

The third aspect of the invention relates to the use of the composition according to the first aspect of the invention or prepared by means of the method of the second aspect of the invention as an artificial grass infill.

### PREFERRED EMBODIMENT OF THE INVENTION

The first aspect of the invention relates to an infill composition for artificial grass comprising particles comprising at least 20% natural rubber and at least one mineral filler.

Unless otherwise defined, all technical and scientific terms used herein have the same meaning that is commonly understood by a person skilled in the art to which this invention pertains. However, methods and materials similar or equivalent to those described herein in the implementation or testing of the present invention may also be used.

The term "particles" relates to an individual portion or unit of the infill composition. Likewise, the terms particle, granule or pellet are interchangeably used.

The term "natural rubber", also known as latex, relates to rubber that is mainly composed of isoprene polymers generated from natural sources. Natural rubber is generated by means of a polymerisation reaction that occurs in nature, the *Hevea Brasiliensis,* for example, and is obtained as an aqueous solution by extraction of the bark. From a chemical perspective, natural rubber is a natural polymer.

The term "mineral filler" relates to solid inorganic materials, such as fine particles or mineral powders, which are used to modify the physical, chemical or mechanical properties of the resulting composite material. These compounds, when mixed with polymers, can improve their resistance, increase its density and, for example, in the particular case of the invention, when mixed with rubber, it acts as a rubber elasticity reducer.

In a preferred embodiment, the particles of the composition comprise between 20 and 80 percent by weight with respect to the particles of the composition. In an even more preferred embodiment of the invention, the particles of the composition comprise between 40 and 60% by weight with respect to the particles of the composition.

In another preferred embodiment of the composition of the invention, the particles of the composition comprise between 20 and 60 percent by weight with respect to the particles of the composition. In the most preferred embodiment, the particles of the composition comprise between 30 and 50% by weight of mineral filler with respect to the particles of the composition. The mineral filler contained in the particles of the composition of the invention is selected from the group of calcium carbonate, silica, talc, kaolin, titanium dioxide, zinc oxide, baryte, mica, bentonite, wollastonite or mixtures thereof.

Additionally, in another embodiment of the composition of the first aspect of the invention, the particles of the composition comprise plant filler. The term "plant filler" relates to materials of plant origin used as components in a composition, these usually being fruit peels and stones, for example, rice husk or crushed olive pit. The incorporation of plant filler in the particles of the composition allows a modulation of the density thereof, allowing them to adjust to the appropriate values in the field. In another preferred embodiment of the invention, the plant filler is selected from fruit peels, fruit stones and/or fibre of plant origin, preferably the plant filler is selected from rice husk, nut shell, peanut shell, almond shell, hazelnut shell, olive pit, corn fibres, coconut fibre or mixtures thereof.

In another preferred embodiment of the invention, the particles of the composition of the first aspect of the invention comprise between 5 and 25% by weight of plant filler, it preferably comprises between 10 and 20% by weight with respect to the particles of the composition.

Additionally, the particles of the composition of the first aspect of the invention also comprise an auxiliary additive. The term "auxiliary additive" relates to an additive that facilitates the manipulation and mixing of the substances in the composition. In this particular case, the auxiliary additive relates to biodegradable polymeric compounds. In the most preferred embodiment the auxiliary additive is a biodegradable polyester. The auxiliary additive functions as a process auxiliary, facilitating the mixing of the composition and the achievement of the appropriate particle size, facilitating the joint mechanical process. In addition to its role in manipulation, these biodegradable polyesters contribute to the environmental sustainability of the product, as same are able to decompose in biological environments.

In the most preferred embodiment, the particles of the composition of the first aspect of the invention comprise an auxiliary additive selected from the group of polycaprolactone (PCL), polyurethane (PU), polybutyl ethylene tartrate (PBTE), polyhydroxyalkanoates (PHA), polylactic acid (PLA) or mixtures thereof.

In another more preferred embodiment of the invention, the particles of the composition of the first aspect of the invention comprise between 3 and 8% by weight of auxiliary additive in relation to the particles of the composition. In the most preferred embodiment of the invention the particles of the composition of the first aspect of the invention comprise approximately 5 percent of the particles of the composition.

Certain ranges are presented with numerical values preceded by the term "approximately". The term "approximately" is used in this document to provide literal support for the exact preceded number, as well as a number close or approximate to the number preceding the term. To determine whether a number is close to or approximately a specifically recited number, the close or approximate unrecited number may be a number which, in the context in which it is presented, provides the substantial equivalent of the number specifically recited.

In the most preferred embodiment the composition of the first aspect of the invention has a density between 0.95 and 1.5 g/cm³.

In a preferred embodiment, the particles of the composition according to the first aspect of the invention have a size between 1 and 8 mm, more preferably between 1.5 and 3 mm. The size of the particles is determined by known and common methods in the field of technology, for example, by means of sieving.

In the compositions of the invention at least 40% by weight of the components of the composition are of renewable origin. The term "renewable origin" relates to those that come from natural sources that can be regenerated or replaced in a relatively short period of time. Some examples of these materials are polymers of natural origin, minerals or products resulting from the agricultural industry, such as nut shells or the like, wood or natural fibres, such as cotton, flax or hemp.

In another preferred embodiment of the invention, the particles of the composition of the invention comprise at least 20% natural rubber, at least one mineral filler, at least one plant filler and at least one auxiliary additive. In another even more preferred embodiment of the invention, the particles of the composition of the invention consist of at least 20% natural rubber, at least one mineral filler, at least one plant filler and at least one auxiliary additive. In another even more preferred embodiment of the invention, the particles of the composition of the invention comprise between 40 and 60% by weight of natural rubber, between 30 to 50% of at least one mineral filler, between 10 and 20% of at least one plant filler and approximately 5% of at least one auxiliary additive. All percentages are expressed as weight percentages of particles unless otherwise specified.

The second aspect of the invention relates to a method for the preparation of an infill composition for artificial grass according to the first aspect of the invention comprising the following steps:
i. Supplying the natural rubber and at least one mineral filler in the appropriate proportions;
ii. Optionally, adding at least one plant filler and/or at least one auxiliary additive to the previous mixture in the appropriate proportions;
iii. Mixing the components of step i. or step ii. until the mixture is homogenised; and
iv. Particularisation of the mixture obtained in the previous step by means of mechanical means to the desired size.

In a preferred embodiment, in the process for the preparation of an infill composition for artificial grass according to the invention, the particles obtained in the particularisation of step iv. have a size between 1 and 8 mm. In the most preferred embodiment of the second aspect of the invention, the particles resulting in step iv. have a size between 1.5 and 3 mm.

The mechanical means used for the particularisation of the mixture obtained in step i. or ii., are mechanical means known to the person skilled in the art, some of these may be in a non-limiting manner, extrusion and cutting, crushing, or the like.

In a preferred embodiment, in the process for the preparation of an infill composition for artificial grass according to the invention, mixing the components of step iii. is performed in a Banbury-type kneader.

The third aspect of the invention relates to the use of the composition according to the first aspect of the invention or prepared by means of the method of the second aspect of the invention as an artificial grass infill.

Having adequately described the nature of the present invention, as well as the manners of implementing the same, is not considered necessary to extend its explanation so that any person skilled in the art understands its scope and the advantages that derive therefrom. It is specified that, within its essence, it may be carried out in other embodiments that differ in detail from those provided by way of example, and which are also covered by the requested protection, as long as they do not alter, change or modify its fundamental principle.

### EXAMPLES

As an illustrative, but non-limiting example, different embodiments of the infill compositions for artificial grass, as well as the methods used in its preparation, are described below. These descriptions provide a more detailed and specific view of the formulations and methods, serving as representative examples, but not restricting the wide variety of compositions and methods that can be applied in the manufacture of sustainable infills for synthetic sports surfaces.

| **Component** | **Ex. 1 (Kg)** | **Ex. 2 (Kg)** | **Ex. 3 (Kg)** | **Ex. 4 (Kg)** | **Ex. 5 (Kg)** |
|---|---|---|---|---|---|
| Natural rubber | 55 | 50 | 45 | 55 | 45 |
| Calcium carbonate | 45 | 45 | 35 | 30 | 35 |
| Polycaprolactone | - | 5 | 10 | - | |
| Polyurethane | - | - | - | - | 10 |
| Plant filler (rice husk) | - | - | 10 | 15 | - |
| Plant filler (walnut shell) | - | - | - | - | 10 |
| **TOTAL** | 100 | 100 | 100 | 100 | 100 |

### Example 1

The composition of example 1 is mixed and homogenised using a Banbury-type mixer-kneader. Next, it is extruded in air cutting to obtain particles between 4 mm and 8 mm.

### Example 2

The composition of example 2 is mixed and homogenised using a Banbury-type mixer-kneader. Next, the mixture is passed through the calender to obtain a fine sheet that is crushed to obtain particles of 3 mm to 6 mm.

### Example 3

The composition of example 3 is mixed and homogenised using a Banbury-type mixer-kneader. Next, the mixture is passed through the calender to obtain a fine sheet that is crushed to obtain particles of 1 mm to 3 mm.

### Example 4

The composition of example 4 is mixed and homogenised using a Banbury-type mixer-kneader. Next, the mixture is passed through the calender to obtain a fine sheet that is crushed to obtain particles of 1 mm to 3 mm.

### Example 5

The composition of example 4 is mixed and homogenised using a Banbury-type mixer-kneader. Next, the mixture is passed through the calender and subsequently the sheet obtained is crushed using a cryogenic crusher for grinding to a size less than 1 mm.

### Example 6

The composition of example 4 is mixed and homogenised using a Banbury-type mixer-kneader. Next, an extruder with water cutting is used to cut and homogenise the cut to particles of about 4 mm in size.

## Claims

1. An infill composition for artificial grass comprising particles comprising at least 20% by weight of natural rubber with respect to the particles of the composition and at least one mineral filler.

2. The composition according to the preceding claim, wherein the particles of the composition comprise between 20 and 80% by weight of natural rubber with respect to the composition, preferably between 40 and 60% by weight with respect to the particles of the composition.

3. The composition according to any of the preceding claims, wherein the particles of the composition comprise between 20 and 60% by weight of mineral filler with respect to the particles of the composition, preferably between 30 and 50% by weight with respect to the particles of the composition.

4. The composition according to any of the preceding claims wherein the particles of the composition additionally comprise a plant filler.

5. The composition according to the preceding claim, wherein the plant filler is selected from fruit peels, fruit stones and/or fibre of plant origin, preferably the plant filler is selected from rice husk, nut shell, peanut shell, almond shell, hazelnut shell, olive pit, corn fibres, coconut fibre or mixtures thereof.

6. The composition according to claims 4 or 5, wherein the particles of the composition comprise between 5 and 25% by weight of plant filler with respect to the particles of the composition, it preferably comprises between 10 and 20% by weight with respect to the particles of the composition.

7. The composition according to any of the preceding claims, wherein the mineral filler is selected from calcium carbonate, silica, talc, kaolin, titanium dioxide, zinc oxide, baryte, mica, bentonite, wollastonite or mixtures thereof.

8. The composition according to any of the preceding claims, wherein the particles of the composition comprise an auxiliary additive, it preferably comprises between 3 and 8% by weight with respect to the particles of the composition.

9. The composition according to the preceding claim, wherein the auxiliary additive is a biodegradable polymer from the polyester family, preferably the auxiliary additive is selected from polycaprolactone (PCL), polyurethane (PU), polybutyl ethylene tartrate (PBTE), polyhydroxyalkanoates (PHA), polylactic acid (PLA) or mixtures thereof.

10. The composition according to any of the preceding claims, wherein the composition has a density between 0.95 and 1.5 g/cm3.

11. The composition according to any of the preceding claims, wherein the particles of the composition have a size between 1 and 8 mm, preferably between 1.5 and 3 mm.

12. The composition according to any of the preceding claims, wherein at least 40% by weight of the components of the composition are of renewable origin.

13. A method for the preparation of an infill composition for artificial grass according to any of claims 1 to 12 comprising the steps:
i. Supplying the rubber and mineral filler in the appropriate proportions;
ii. Optionally, adding plant filler and/or auxiliary additive to the previous mixture in the appropriate proportions;
iii. Mixing the components of step i. or ii. until the mixture is homogenised; and
iv. Particularisation of the mixture obtained in the previous step by means of mechanical means to the desired size.

14. The method for the preparation of an infill composition for artificial grass according to the preceding claim wherein the particles obtained in the particularisation of step iv. have a size between 1 and 8 mm preferably between 1.5 and 3 mm.

15. The process for the preparation of an infill composition for artificial grass according to the preceding claim wherein step iii. is performed in a Banbury-type kneader.

16. Use of the composition according to claims 1 to 12 or prepared by means of the method according to claims 13 to 15 as artificial grass infill.
